Europäisches Patentamt

European Patent Office

Office européen des brevets

(19)

(11) Numéro de publication: **0 302 800**
**A1**

## (12) DEMANDE DE BREVET EUROPEEN

(21) Numéro de dépôt: **88402052.0**

(51) Int. Cl.4: **C 03 C 3/091**

(22) Date de dépôt: **05.08.88**

(30) Priorité: **07.08.87 FR 8711275**

(43) Date de publication de la demande:
**08.02.89 Bulletin 89/06**

(84) Etats contractants désignés:
**AT BE CH DE ES FR GB GR IT LI LU NL SE**

(71) Demandeur: **EURINVAL INDUSTRIE**
**Tour Essor 93 14, Rue Scandicci**
**F-93500 Pantin (FR)**

(72) Inventeur: **Saunier, Jean**
**15, Rue Georgeon**
**F-94320 Thiais (FR)**

**Moretti, Cesare**
**Via Fabrici, 1**
**San Vito al Taglianmento (IT)**

**Dutilleul, Jacques**
**Chemin de la Verrerie**
**F-76390 Aumale (FR)**

(74) Mandataire: **Laget, Jean-Loup et al**
**Cabinet Pierre Loyer 77, rue Boissière**
**F-75116 Paris (FR)**

(54) **Verre transparent, neutre et gamma-résistant.**

(57) Verre transparent, neutre et gamma-résistant, caractérisé
par la composition suivante :
$SiO_2$    65 à 70 %
$B_2O_3$    4 à 7 %
$Al_2O_3$    6 à 9 %
oxydes Alcalino Terreux (RO)    5 à 7 %
oxydes Alcalins ($R_2O$)    11 à 13 %
$CeO_2$    0.3 à 0.8 %
$Li_2O$    0.05 à 0.2 %

EP 0 302 800 A1

**Description**

## Verre transparent, neutre et gamma-résistant

L'invention concerne un verre transparent, neutre et gamma-résistant.

Il existe deux grandes catégories de verres : les verres borosilicates et les verres sodocalciques.

Il est connu de réaliser des verres transparents neutres, c'est-à-dire présentant une grande résistance hydrolytique. Selon la Pharmacopie Européenne, un verre de classe I est un verre dénommé "verre neutre", dont la résistance hydrolytique élevée est due à sa composition chimique. De tels verres neutres sont des verres borosilicates. Ils sont utilisés notamment pour le conditionnement des préparations injectables et buvables, et en particulier pour la fabrication des ampoules thermoformées.

Pour assurer la stérilité et la conservation des préparations contenues dans des récipients en verre, tels qu'ampoules, seringues ou flacons, on peut les soumettre à une irradiation par rayonnement X ou gamma, par exemple. Or les verres prennent une coloration, sous irradiation, par formation de centres colorés. Cette coloration est un inconvénient pour le contrôle optique du contenu des ampoules.

On a donc cherché à rendre les verres gamma-résistants, c'est-à-dire à les préserver de la coloration en cas d'irradiation. Jusqu'à présent, les seuls verres gamma-résistants sont des verres sodocalciques, c'est-à-dire des verres à faible résistance hydrolytique, qui ne peuvent donc pas être des verres neutres.

Le but de l'invention est de proposer un verre transparent neutre, qui ne prenne pas de coloration visible en cas d'irradiation, c'est-à-dire, qui soit gamma-résistant.

L'invention a pour objet un verre transparent, neutre et gamma-résistant, caractérisé par la composition suivante :

SiO2    65 à 70 %
B2O3    4 à 7 %
Al2O3    6 à 9 %
oxydes Alcalino Terreux (RO)    5 à 7 %
oxydes Alcalins (R2O)    11 à 13 %
CeO2    0.3 à 0.8 %
Li2O    0.05 à 0.2 %

Selon un exemple particulier de réalisation de l'invention, la composition du verre est la suivante :

SiO2    67,5 à 68,5 %
B2O3    5 à 5,3 %
Al2O3    7,5 à 8 %
CaO    3,2 à 3,4 %
MgO    0,1 à 0,3 %
BaO    1,5 à 3 %
Na2O    10,5 à 11 %
K2O    1,3 à 1,5 %
Li2O    0,1 %
CeO2    0,5 à 0,7 %

Le verre selon l'invention présente plusieurs caractéristiques intéressantes.

Tout d'abord, en raison de sa teneur élevée en alumine, il présente de remarquables propriétés mécaniques et une excellente résistance aux chocs thermiques.

Ensuite, suivant les tests de la Pharmacopée Européenne, il se situe dans la classe I en raison de sa résistance hydrolytique élevée.

Enfin, la présence d'oxyde de cerium dans le réseau vitreux rend le verre gamma-résistant et donc susceptible de subir sans coloration sensible une irradiation par rayonnement gamma ou bêta (électrons accélérés) en vue de la stérilisation du contenu d'ampoules ou même de matériel médico-chirurgical à usage unique, comme les seringues.

A titre d'exemple, après une irradiation gamma de 10 à 25 KGy (1 kilo Gray correspondant à 0,1 M Rad) le verre selon l'invention ne présente pas d'altération sensible de la transparence. Par ailleurs, sa résistance hydrolytique est inférieure aux limites imposées par la Pharmacopée Européenne, le situant de ce fait en classe I.

**Revendications**

1. Verre transparent, neutre et gamma-résistant, caractérisé par la composition suivante :
SiO2    65 à 70 %
B2O3    4 à 7 %
Al2O3    6 à 9 %
oxydes Alcalino Terreux (RO)    5 à 7 %
oxydes Alcalins (R2O)    11 à 13 %
CeO2    0.3 à 0.8 %
Li2O    0.05 à 0.2 %

2. Verre selon la revendication 1, caractérisé par la composition suivante :
SiO2    67,5 à 68,5 %
B2O3    5 à 5,3 %
Al2O3    7,5 à 8 %
CaO    3,2 à 3,4 %
MgO    0,1 à 0,3 %
BaO    1,5 à 3 %
Na2O    10,5 à 11 %
K2O    1,3 à 1,5 %
Li2O    0,1 %
CeO2    0,5 à 0,7 %

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 499 775 (M.J. ALBINAK)<br>* Revendication 1 *<br>--- | 1,2 | C 03 C 3/091 |
| X | FR-A-2 531 064 (SCHOTT GLASWERKE)<br>* Revendications; page 5, lignes 18-31 *<br>----- | 1,2 | |

DOMAINES TECHNIQUES RECHERCHES (Int. Cl.4)

C 03 C

Le présent rapport a été établi pour toutes les revendications

| Lieu de la recherche | Date d'achèvement de la recherche | Examinateur |
|---|---|---|
| LA HAYE | 31-10-1988 | BOUTRUCHE J.P.E. |

EPO FORM 1503 03.82 (P0402)